# EUROPEAN PATENT APPLICATION

(11) **EP 4 521 231 A1**
(43) Date of publication of application: **12.03.2025**
(21) Application number: 24196418.8
(22) Date of filing: 26.08.2024
(51) Int. Cl.: G06F 3/14, G06T 19/00

(54) **APPARATUSES, SYSTEM AND METHOD FOR AUGMENTED REALITY DISPLAY**

(30) Priority: 07.09.2023 GB 202313653
(71) Applicant: Nokia Technologies Oy, 02610 Espoo (FI)
(72) Inventor: ERONEN, Antti Johannes, Tampere (FI); VILERMO, Miikka Tapani, Siuro (FI); LEHTINIEMI, Arto Juhani, Lempäälä (FI)
(74) Representative: Nokia EPO representatives

(57) **Abstract**

An apparatus comprising: means for enabling display of at least one visual object on a first AR display; means for obtaining at least one display constraint of a second AR display; means for transforming the first position parameter and the first transparency parameter to produce a second position parameter and a second transparency parameter respectively; means for determining if a combination of the second position parameter and the second transparency parameter is a permitted combination; and means for, in dependence upon a determination that the combination of the second position parameter and the second transparency parameter is not a permitted combination, adapting at least one of the second position parameter or the second transparency parameter such that a combination of the second position parameter and the second transparency parameter is a permitted combination.

## Description

### TECHNOLOGICAL FIELD

Examples of the disclosure relate to apparatuses, a system and a method for augmented reality display. Some relate to apparatuses, a system and a method for augmented reality display of at least one visual object on a first augmented reality display and a second augmented reality display.

### BACKGROUND

There exist methods for displaying graphics on augmented reality devices and head-up displays. Content items can be positioned at different locations of such displays.

Different displays may have different usage contexts and thus different requirements for what content can be displayed and where.

### BRIEF SUMMARY

According to various, but not necessarily all, examples there is provided an apparatus comprising: means for enabling display of at least one visual object on a first AR display, wherein the display of the at least one visual object on the first AR display is defined by a first position parameter and a first transparency parameter; means for obtaining at least one display constraint of a second AR display, wherein the at least one display constraint of the second AR display indicates one or more permitted combinations of a position parameter and a transparency parameter; means for transforming the first position parameter and the first transparency parameter to produce a second position parameter and a second transparency parameter respectively; means for determining if a combination of the second position parameter and the second transparency parameter is a permitted combination; and means for, in dependence upon a determination that the combination of the second position parameter and the second transparency parameter is not a permitted combination, adapting at least one of the second position parameter or the second transparency parameter such that a combination of the second position parameter and the second transparency parameter is a permitted combination.

In some but not necessarily all examples, the apparatus further comprises means for creating a data packet comprising at least the second position parameter and the second transparency parameter; and means for transmitting the created data packet towards a second AR apparatus such that the display of the at least one visual object on the second AR display is enabled.

In some but not necessarily all examples, the apparatus further comprises means for receiving an indication that the display of the at least one visual object is to be moved from the first AR display to the second AR display; wherein the means for transforming the first position parameter and the first transparency parameter is configured to perform the transformation in dependence upon receiving the indication.

In some but not necessarily all examples, at least one of the first AR display or the second AR display is a see-through AR display.

In some but not necessarily all examples, the means for transforming the first position parameter and the first transparency parameter is configured to perform a content-independent transform of the first position parameter and the first transparency parameter.

In some but not necessarily all examples, the means for adapting at least one of the second position parameter or the second transparency parameter is configured to perform a content-dependent transform of at least one of the second position parameter or the second transparency parameter.

In some but not necessarily all examples, the means for adapting at least one of the second position parameter or the second transparency parameter is configured to perform either: adapting the second position parameter and not adapting the second transparency parameter; or adapting the second transparency parameter and not adapting the second position parameter.

In some but not necessarily all examples, the first position parameter indicates a position of the at least one visual object as being in one of a plurality of first display regions of the first AR display; and the second position parameter indicates a position of the at least one visual object as being in one of a plurality of second display regions of the second AR display.

In some but not necessarily all examples, the at least one display constraint of the second AR display is at least partially pre-defined.

In some but not necessarily all examples, the at least one display constraint of the second AR display is further defined by a user input.

In some but not necessarily all examples, the means for enabling display of at least one visual object on a first AR display are configured to display a plurality of visual objects on the first AR display, and wherein the display of the plurality of visual objects on the first AR display is defined by a plurality of respective first position parameters and first transparency parameters.

In some but not necessarily all examples, the apparatus further comprises the firstAR display.

According to various, but not necessarily all, examples there is provided an apparatus comprising: means for transmitting at least one display constraint of a second AR display to a first apparatus, wherein a display constraint of the second AR display indicates a permitted combination of a position parameter and a transparency parameter; means for receiving a data packet from the first apparatus comprising at least a second position parameter and a second transparency parameter wherein the combination of the second position parameter and the second transparency parameter is a permitted combination; and means for, in response to receiving the data packet, enabling display of at least one visual object on the second AR display, wherein the display of the at least one visual object on the second AR display is defined by the second position parameter and the second transparency parameter.

In some but not necessarily all examples, the display of the at least one visual object on the second AR display is further defined by an importance parameter.

In some but not necessarily all examples, the importance parameter is user-defined and/or predefined by the apparatus.

In some but not necessarily all examples, the apparatus comprises: means for receiving a data packet comprising at least a second position parameter, a second transparency parameter and an importance parameter associated with a further visual object; means for determining if the importance parameter associated with the further visual object is above a threshold; means for, in dependence upon a determination that the importance parameter associated with the further visual object is above the threshold, designating the combination of the second position parameter and the second transparency parameter associated with the further visual object as a permitted combination; and means for, in dependence upon a determination that the importance parameter associated with the further visual object is not above the threshold, determining if the combination of the second position parameter and the second transparency parameter associated with the further visual object is a permitted combination; and means for, in dependence upon a determination that the combination of the second position parameter and the second transparency parameter associated with the further visual object is not a permitted combination, adapting at least one of the second position parameter or the second transparency parameter such that a combination of the second position parameter and the second transparency parameter is a permitted combination.

In some but not necessarily all examples, the designation of the combination of the second position parameter and the second transparency parameter associated with the further visual object as a permitted combination is valid for a first time period; and the apparatus further comprises: means for, upon expiry of the first time period, determining if the combination of the second position parameter and the second transparency parameter associated with the further visual object is a permitted combination; and means for, in dependence upon a determination that the combination of the second position parameter and the second transparency parameter associated with the further visual object is not a permitted combination, adapting at least one of the second position parameter or the second transparency parameter such that a combination of the second position parameter and the second transparency parameter is a permitted combination.

According to various, but not necessarily all, examples there is provided a system comprising: a first apparatus comprising means for enabling display of at least one visual object on a first AR display, wherein the display of the at least one visual object on the first AR display is defined by a first position parameter and a first transparency parameter; and a second apparatus comprising means for enabling display of the at least one visual object on a second AR display, wherein the display of the at least one visual object on the second AR display is defined by a second position parameter and a second transparency parameter; means for identifying at least one display constraint of the second AR display, wherein a display constraint of the second AR display indicates a permitted combination of a position parameter and a transparency parameter; means for transforming the first position parameter and the first transparency parameter to produce the second position parameter and the second transparency parameter respectively; means for determining if a combination of the second position parameter and the second transparency parameter is a permitted combination; and means for, in dependence upon a determination that the combination of the second position parameter and the second transparency parameter is not a permitted combination, changing at least one of the second position parameter or the second transparency parameter such that a combination of the second position parameter and the second transparency parameter is a permitted combination.

According to various, but not necessarily all, examples there is provided a method comprising: enabling display of at least one visual object on a first AR display, wherein the display of the at least one visual object on the first AR display is defined by a first position parameter and a first transparency parameter; identifying at least one display constraint of a second AR display, wherein a display constraint of the second AR display indicates a permitted combination of a position parameter and a transparency parameter; transforming the first position parameter and the first transparency parameter to produce a second position parameter and a second transparency parameter respectively; determining if a combination of the second position parameter and the second transparency parameter is a permitted combination; in dependence upon a determination that the combination of the second position parameter and the second transparency parameter is not a permitted combination, changing at least one of the second position parameter or the second transparency parameter such that a combination of the second position parameter and the second transparency parameter is a permitted combination; and enabling display of the at least one visual object on the second AR display, wherein the display of the at least one visual object on the second AR display is defined by the second position parameter and the second transparency parameter.

According to various, but not necessarily all, examples there is provided a computer program comprising instructions which, when executed by an apparatus, cause the apparatus to perform at least: enabling display of at least one visual object on a first AR display, wherein the display of the at least one visual object on the first AR display is defined by a first position parameter and a first transparency parameter; obtaining at least one display constraint of a second AR display, wherein the at least one display constraint of the second AR display indicates one or more permitted combinations of a position parameter and a transparency parameter; transforming the first position parameter and the first transparency parameter to produce a second position parameter and a second transparency parameter respectively; determining if a combination of the second position parameter and the second transparency parameter is a permitted combination; and in dependence upon a determination that the combination of the second position parameter and the second transparency parameter is not a permitted combination, adapting at least one of the second position parameter or the second transparency parameter such that a combination of the second position parameter and the second transparency parameter is a permitted combination.

According to various, but not necessarily all, examples there is provided examples as claimed in the appended claims.

According to various, but not necessarily all, embodiments there is provided an apparatus comprising
*at least one processor; and*
*at least one memory including computer program code;*
*the at least one memory storing instructions that, when executed by the at least one processor, cause the apparatus at least to perform at least a part of one or more methods disclosed herein.*

*According to various, but not necessarily all, embodiments there is provided an apparatus comprising means for performing at least part of one or more methods disclosed herein. The description of any function and*/*or action should additionally be considered to also disclose any means suitable for performing that function and*/*or action.*

*Functions and*/*or actions described herein can be performed in any suitable way using any suitable method.*

*While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented bylcomprised inlperformable by an apparatus, a method, and*/*or computer program instructions* as *desired, and* as *appropriate.*

### BRIEF DESCRIPTION

Some examples will now be described with reference to the accompanying drawings in which:
FIG 1 shows an example of the subject matter described herein;
FIG 2 shows another example of the subject matter described herein;
FIG 3 shows another example of the subject matter described herein;
FIG 4 shows another example of the subject matter described herein;
FIG 5 shows another example of the subject matter described herein;
FIG 6 shows another example of the subject matter described herein;
FIG 7 shows another example of the subject matter described herein;
FIG 8 shows another example of the subject matter described herein;
FIGs 9A - 9D show another example of the subject matter described herein;
FIGs 10A - 10D show another example of the subject matter described herein;
FIGs 11A - 11B show another example of the subject matter described herein;
FIGs 12A - 12B show another example of the subject matter described herein;
FIG 13 shows another example of the subject matter described herein; and
FIG 14 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The following description and the enclosed FIGs relate to various examples of an apparatus 100 comprising: means for enabling display of at least one visual object on a first AR display 190, wherein the display of the at least one visual object on the first AR display 190 is defined by a first position parameter and a first transparency parameter; means for obtaining at least one display constraint of a second AR display 290, wherein the at least one display constraint of the second AR display 290 indicates one or more permitted combinations of a position parameter and a transparency parameter; means for transforming the first position parameter and the first transparency parameter to produce a second position parameter and a second transparency parameter respectively; means for determining if a combination of the second position parameter and the second transparency parameter is a permitted combination; and means for, in dependence upon a determination that the combination of the second position parameter and the second transparency parameter is not a permitted combination, adapting at least one of the second position parameter or the second transparency parameter such that a combination of the second position parameter and the second transparency parameter is a permitted combination.

The following description also relates to various examples of a second apparatus 200 comprising: means for transmitting at least one display constraint of a second AR display 290 to a first apparatus 100, wherein a display constraint of the second AR display 290 indicates a permitted combination of a position parameter and a transparency parameter; means for receiving a data packet from the first apparatus 100 comprising at least a second position parameter and a second transparency parameter wherein the combination of the second position parameter and the second transparency parameter is a permitted combination; and means for, in response to receiving the data packet, enabling display of at least one visual object on the second AR display 290, wherein the display of the at least one visual object on the second AR display 290 is defined by the second position parameter and the second transparency parameter.

The following description further relates to various examples of a system comprising the apparatus 100 and the second apparatus 200.

Examples set out below relate to the display of visual objects on AR displays. In the examples below, display of at least one visual object on an AR display is defined by a position parameter and a transparency parameter.

In examples, an AR display comprises several sub-displays. For example, smart glasses comprise a left sub-display and a right sub-display.

A position parameter indicates a position on an AR display at which the at least one visual object is to be displayed. In examples, the position parameter comprises co-ordinates that position the at least one visual object relative to a corner of the AR display. In other examples, the position parameter indicates a distance from a corner of the AR display at which the at least one visual object is to be displayed.

In examples, an AR display comprises a plurality of display regions. In some such examples, the position parameter indicates a position of the at least one visual object as being in one of the plurality of display regions of the AR display. In some examples, the position parameter indicates a display region and the at least one visual object may be positioned anywhere within the indicated display region. In other examples, the position parameter indicates a display region and a position within the indicated display region.

A transparency parameter indicates a level of transparency at which the at least one visual object is to be displayed. In examples, the transparency parameter is continuous, that is the transparency parameter may take any value from 0% (no transparency) to 100% (full transparency). In other examples, the transparency parameter may take discrete values, for example, 0%, 25%, 50%, 75%, 100% transparency.

In other examples, display of at least one visual object on an AR display is defined by means for controlling a position of the visual object and means for controlling transparency of the visual object. The position parameter may provide means for controlling the position of the at least one visual object and the transparency parameter may provide means for controlling the transparency of the at least one visual object.

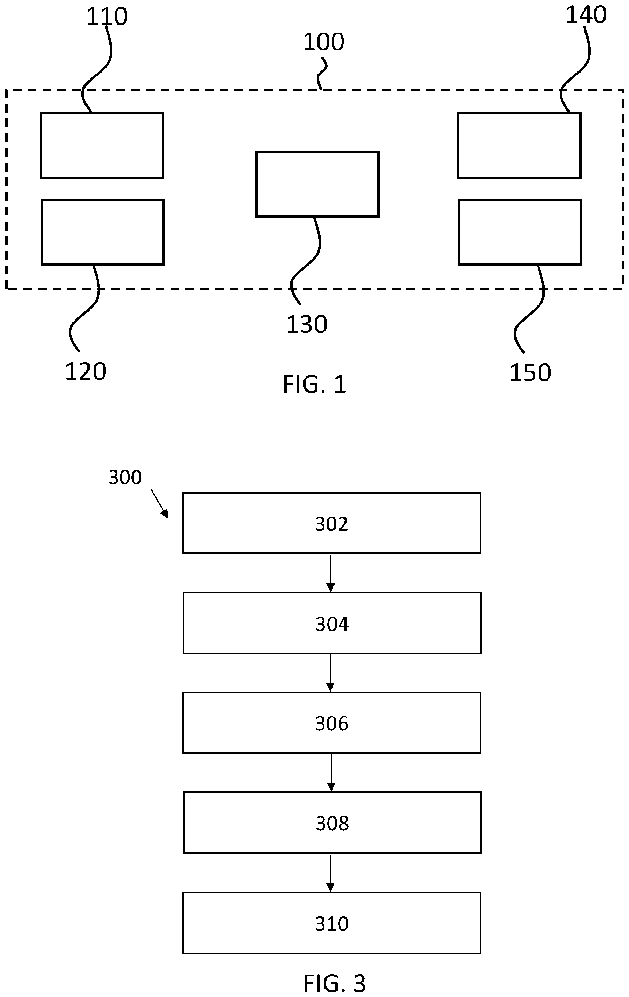

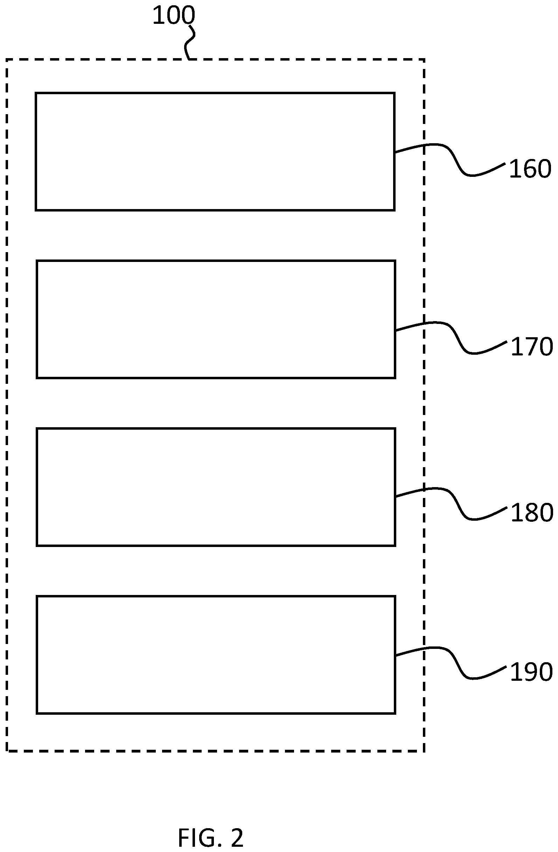

FIG 1 schematically illustrates an example of an apparatus 100. FIG 2 illustrates features of the apparatus 100. Features not illustrated in FIG 1 are illustrated in FIG 2.

The apparatus 100 comprises means 110 for enabling display of at least one visual object on a first AR display 190, wherein the display of the at least one visual object on the first AR display 190 is defined by a first position parameter and a first transparency parameter. A visual object may comprise any virtual visual content, for example, an AR object, user interface (UI) objects, or visual display information.

In examples, at least one of the first position parameter and the first transparency parameter are user-defined.

In examples, the first AR display 190 has a plurality of first display regions. In some such examples, the first position parameter indicates a position of the at least one visual object as being in one of a plurality of the first display regions of the first AR display 190.

In examples, the means for enabling display of at least one visual object are configured to display a plurality of visual objects on the first AR display 190. In such examples, the display of the plurality of visual objects on the first AR display 190 is defined by a plurality of respective first position parameters and first transparency parameters.

In examples, the first AR display 190 comprises a non-transparent AR display (the AR display is not see-through). In examples, the first AR display 190 comprises a non-transparent head-mounted AR display; a smartphone display; or an AR display that is not hand-held, such as a display screen.

In examples, the first AR display 190 is a see-through AR display. In examples, the first AR display 190 comprises a see-through head-mounted AR display such as smart glasses or another see-through head-mounted AR display; a hand-held AR display such as a transparent smartphone display; or a see-through AR display that is not hand-held, such as a car windscreen.

The apparatus 100 comprises means 120 for obtaining at least one display constraint of a second AR display 290. The means for obtaining the at least one display constraint may comprise a receiver or a transceiver. Display of the at least one visual object on the second AR display 290 is defined by a second position parameter and a second transparency parameter.

Obtaining the at least one display constraint may comprise receiving a data packet comprising the at least one display constraint from an apparatus comprising the second AR display 290. In examples, the at least one display constraint is received from the apparatus comprising the second AR display 290 in a configuration step. The configuration step stores the at least one display constraint in a memory of the apparatus 100. Display of the at least one visual object may thus be handed from the first AR display 190 to the second AR display 290 multiple times based on a single configuration step. In other examples, the apparatus 100 receives the at least one display constraint from the apparatus comprising the second AR display 290 each time display of the at least one visual object is to be handed over from the first AR display 190 to the second AR display 290.

The at least one display constraint of the second AR display 290 indicates one or more permitted combinations of a position parameter and a transparency parameter. The permitted combination indicates combinations of a position parameter and a transparency parameter that may be used to define display of a visual object on the second AR display.

In some, but not necessarily all, examples, the first AR display 190 has at least one display constraint. The at least one display constraint of the first AR display 190 indicates one or more permitted combinations of a position parameter and a transparency parameter.

In examples, the second AR display 290 has a plurality of second display regions. In some such examples, the second position parameter indicates a position of the at least one visual object as being in one of a plurality of the second display regions of the second AR display 290.

In examples, the at least one display constraint of the second AR display 290 is at least partially pre-defined. For example, the at least one display constraint may be pre-defined according to safety regulations. Such a pre-definition cannot be adjusted or removed by a user input.

In some such examples, the at least one display constraint of the second AR display 290 is further defined by a user input.

In examples, the second AR display 290 comprises a non-transparent AR display (the AR display is not see-through). In examples, the second AR display 290 comprises a non-transparent head-mounted AR display; a smartphone display; or an AR display that is not hand-held, such as a display screen.

In examples, the second AR display 290 is a see-through AR display. In examples, the second AR display 290 comprises a see-through head-mounted AR display such as smart glasses or another see-through head-mounted AR display; a hand-held AR display such as a transparent smartphone display; or a see-through AR display that is not hand-held, such as a car windscreen.

The apparatus 100 comprises means 130 for transforming the first position parameter and the first transparency parameter to produce a second position parameter and a second transparency parameter respectively. In examples, the means for transforming comprises control circuitry configured to transform the first position parameter and the first transparency parameter to produce a second position parameter and a second transparency parameter respectively. In examples in which the means for enabling display of at least one visual object are configured to display a plurality of visual objects, the means 130 are configured to transform the respective first position parameters and respective first transparency parameters to produce respective second position parameters and respective second transparency parameters respectively.

In examples, the first position parameter and the first transparency parameter are transformed to produce the second position parameter and the second transparency parameter such that they are suitable for use on the second AR display 290.

For example, the second AR display may have a size and/or shape different to the size and/or shape of the first AR display. In such examples, the transformation is based on the difference between the size and/or shape of the first AR display and the size and/or shape of the second AR display. For example, the transformation may cause scaling, rotating, or moving the visual object within the display by transforming the first position parameter.

In examples, the means for transforming the first position parameter and the first transparency parameter is configured to perform a content-independent transform of at least one of the first position parameter and the first transparency parameter. In examples, a content-independent transform is based, at least in part, on a difference in size and/or shape of the second AR display from the first AR display. In examples, a content-independent transform is not based on a position parameter or a transparency parameter of a visual object being transformed.

The apparatus 100 comprises means 140 for determining if a combination of the second position parameter and the second transparency parameter is a permitted combination. In examples, the means 140 comprise control circuitry.

In examples in which the means for enabling display of at least one visual object are configured to display a plurality of visual objects, the means 140 are configured to determine if the respective combinations of the second position parameter and the second transparency parameter are permitted combinations.

The apparatus 100 comprises means 150 for, in dependence upon a determination that the combination of the second position parameter and the second transparency parameter is not a permitted combination, adapting at least one of the second position parameter or the second transparency parameter such that a combination of the second position parameter and the second transparency parameter is a permitted combination. In examples, the means 150 comprise control circuitry.

In examples in which the means for enabling display of at least one visual object are configured to display a plurality of visual objects, the means 150 are configured to adapt at least one of the respective second position parameters or the respective second transparency parameters such that the respective combinations of the second position parameters and second transparency parameters are permitted combinations.

In examples, the means for adapting at least one of the second position parameter or the second transparency parameter is configured to perform a content-dependent transform of at least one of the second position parameter or the second transparency parameter. In examples, a content-dependent transform is based, at least in part, on the position parameter or the transparency parameter of the visual object being transformed. In examples, the content-dependent transform is further based on the display constraint of the second AR display.

In examples, adapting the second position parameter comprises changing the second position parameter. In some such examples, changing the position parameter causes the visual object to be positioned in a different display region.

In examples, adapting the second transparency parameter comprises increasing or decreasing the transparency of the visual object.

In examples, the means for adapting at least one of the second position parameter or the second transparency parameter is configured to perform adapting the second position parameter and not adapting the second transparency parameter.

In examples, the means for adapting at least one of the second position parameter or the second transparency parameter is configured to perform adapting the second transparency parameter and not adapting the second position parameter.

In examples, the means for adapting at least one of the second position parameter or the second transparency parameter is configured to minimize the change in the position parameter and/or the change in the transparency parameter. For example, the change in the position parameter may be limited to a small change or to zero change such that continuity of display of the at least one visual object is provided when the display of the at least one visual object is handed from the first AR display 190 to the second AR display 290.

In examples, the display of the at least one visual object on the first AR display 190 is further defined by an importance parameter.

In examples, the importance parameter is user-defined. In examples, the importance parameter is predefined by the apparatus.

Referring now to FIG 2, in examples, the apparatus 100 comprises means 160 for creating a data packet comprising at least the second position parameter and the second transparency parameter. In examples, the means 160 comprise control circuitry.

In examples in which the display of the at least one visual object on the first AR display 190 is further defined by an importance parameter, the data packet further comprises the importance parameter.

In some such examples, the apparatus 100 comprises means 170 for transmitting the created data packet towards a second AR apparatus such that the display of the at least one visual object on the second AR display 290 is enabled. In examples, the means 170 comprise a transmitter or a transceiver.

In examples, display of the at least one visual object on the first AR display 190 is stopped after the data packet has been transmitted towards the second AR apparatus.

In examples, the apparatus 100 comprises means 180 for receiving an indication that the display of the at least one visual object is to be moved from the first AR display 190 to the second AR display 290. In examples, the means 180 comprise a receiver or a transceiver.

In examples, the indication is triggered by a change in position of the user, for example by a user moving such that they are proximal to the second AR display 290. For example, if the second AR display 290 is a car windscreen and the user enters the car, the indication may be triggered. In other examples, the indication is triggered by a user input to the apparatus 100 or to another apparatus in communication with the apparatus 100.

In such examples, the means for transforming the first position parameter and the first transparency parameter is configured to perform the transformation in dependence upon receiving the indication.

In examples, the apparatus 100 comprises the first AR display 190. In some such examples, the means for enabling a display on the first AR display comprises the first AR display 190.

FIGs 1 and 2 therefore illustrate an apparatus 100 comprising means for performing a method 300 as illustrated in FIG 3, the method 300 comprising:
at block 302, enabling display of at least one visual object on a first AR display, wherein the display of the at least one visual object on the first AR display is defined by a first position parameter and a first transparency parameter;
at block 304, obtaining at least one display constraint of a second AR display, wherein the at least one display constraint of the second AR display indicates one or more permitted combinations of a position parameter and a transparency parameter;
at block 306, transforming the first position parameter and the first transparency parameter to produce a second position parameter and a second transparency parameter respectively;
at block 308, determining if a combination of the second position parameter and the second transparency parameter is a permitted combination; and
at block 310, in dependence upon a determination that the combination of the second position parameter and the second transparency parameter is not a permitted combination, adapting at least one of the second position parameter or the second transparency parameter such that a combination of the second position parameter and the second transparency parameter is a permitted combination.

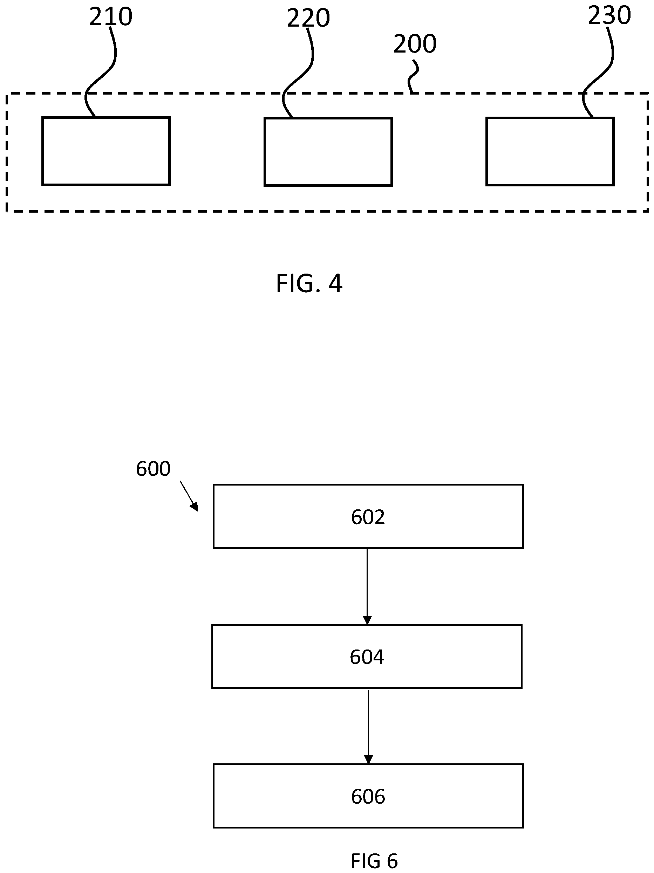

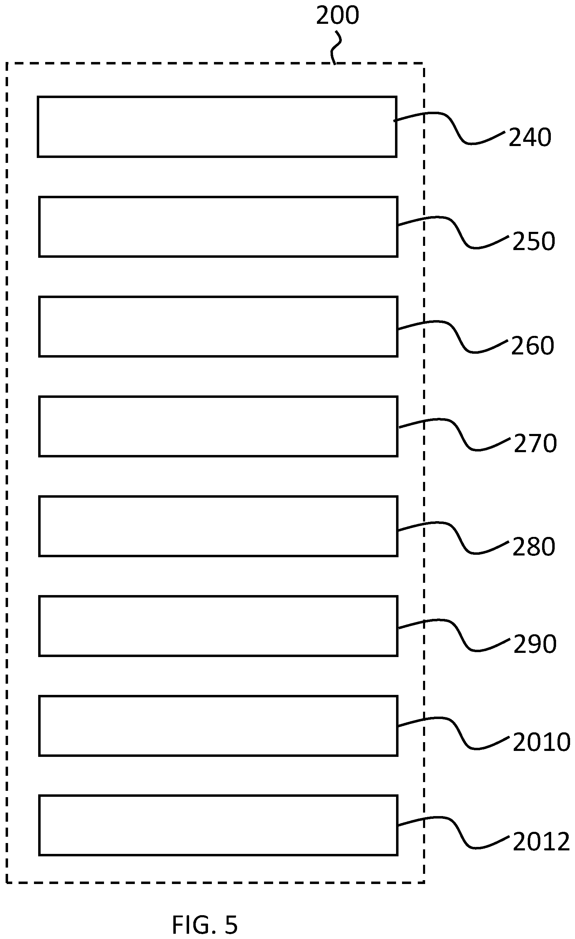

FIG 4 schematically illustrates an example of a second apparatus 200. FIG 5 illustrates features of the second apparatus 200. Features not illustrated in FIG 4 are illustrated in FIG 5.

The second apparatus 200 comprises means 210 for transmitting at least one display constraint of the second AR display 290 to a first apparatus 100, wherein the display constraint of the second AR display 290 indicates the permitted combination of a position parameter and a transparency parameter. In examples, the means 210 comprise a transmitter or a transceiver.

In examples, the first apparatus 100 is the apparatus 100 described with respect to FIGs 1 and 2.

The second apparatus 200 comprises means 220 for receiving the data packet from the first apparatus 100 comprising at least a second position parameter and a second transparency parameter wherein the combination of the second position parameter and the second transparency parameter is a permitted combination. In examples, the means 220 comprise a receiver or a transceiver.

The second apparatus 200 comprises means 230 for, in response to receiving the data packet, enabling display of at least one visual object on the second AR display 290, wherein the display of the at least one visual object on the second AR display 290 is defined by the second position parameter and the second transparency parameter. In examples, the means 230 comprises the second AR display 290.

In examples, the display of the at least one visual object on the second AR display 290 is further defined by an importance parameter.

In some examples, the importance parameter is received from the apparatus. In other examples, the importance parameter is retrieved from a memory of the second apparatus.

In examples, the importance parameter is user defined. In examples, the importance parameter is predefined by the apparatus or the second apparatus.

In examples, the importance parameter indicates a priority level of the visual object relative to other visual objects. For example, a visual object comprising new information (such as an incoming message or an alert) has a higher importance parameter than a visual object that has previously been displayed or is already being displayed (such as ongoing AR content).

Referring now to FIG 5, in examples, the second apparatus 200 comprises means 240 for receiving a data packet comprising at least a second position parameter, a second transparency parameter and an importance parameter associated with a second visual object. In examples, the means 240 comprise a receiver or a transceiver.

In examples, the second apparatus 200 comprises means 250 for determining if the importance parameter associated with the second visual object is above a threshold. In examples, the means 250 comprise control circuitry.

In examples, the second apparatus 200 comprises means 260 for, in dependence upon a determination that the importance parameter associated with the second visual object is above the threshold, designating the combination of the second position parameter and the second transparency parameter associated with the second visual object as a permitted combination. In examples, the means 260 comprise control circuitry.

In some such examples, the designation of the combination of the second position parameter and the second transparency parameter associated with the second visual object as a permitted communication is valid for a first time period.

The duration of the first time period may be determined based on the importance parameter. For example, if the importance parameter is above the threshold but below a second threshold, the first time period may have a first duration. If the importance parameter is above both the threshold and the second threshold, the first time period may have a second duration, longer than the first. In other words, the higher the importance parameter, the longer the duration of the first time period.

In examples, the second apparatus 200 comprises means 2010 for, upon expiry of the first time period, determining if the combination of the second position parameter and the second transparency parameter associated with the second visual object is a permitted combination. In examples, the means 2010 comprise control circuitry.

In such examples, the second apparatus 200 comprises means 2012 for, in dependence upon a determination that the combination of the second position parameter and the second transparency parameter associated with the second visual object is not a permitted combination, adapting at least one of the second position parameter and the second transparency parameter such that a combination of the second position parameter and the second transparency is a permitted communication. In examples, the means 2012 comprise control circuitry.

In examples, the second apparatus 200 comprises means 270 for, in dependence upon the determination that the importance parameter associated with the second visual object is not above the threshold, determining if the combination of the second position parameter and the second transparency parameter associated with the second visual object is a permitted combination. In examples, the means 270 comprise control circuitry.

In examples, the second apparatus 200 comprises means 280 for, in dependence upon a determination that the combination of the second position parameter and the second transparency parameter associated with the second visual object is not a permitted combination, adapting at least one of the second position parameter or the second transparency parameter such that a combination of the second position parameter and the second transparency parameter is a permitted combination. In examples, the means 280 comprise control circuitry.

In examples, the second apparatus 200 comprises the second AR display 290. In some such examples, the means for enabling a display on the second AR display 290 comprise the second AR display 290.

In some examples, after display of the at least one visual object has been enabled on the second AR display, it may be desirable to display the at least one visual object on a further AR display. In such examples, the second AR display 290 is considered to be the first AR display 190 and the further AR display is considered to be the second AR display 290.

FIGs 4 and 5 therefore illustrate an apparatus comprising means for performing a method 600 as illustrated in FIG 6, the method 600 comprising:
at block 602, transmitting at least one display constraint of a second AR display to a first apparatus 100, wherein a display constraint of the second AR display indicates a permitted combination of a position parameter and a transparency parameter;
at block 604, receiving a data packet from the first apparatus 100 comprising at least a second position parameter and a second transparency parameter wherein the combination of the second position parameter and the second transparency parameter is a permitted combination; and
at block 606, in response to receiving the data packet, enabling display of at least one visual object on the second AR display, wherein the display of the at least one visual object on the second AR display is defined by the second position parameter and the second transparency parameter.

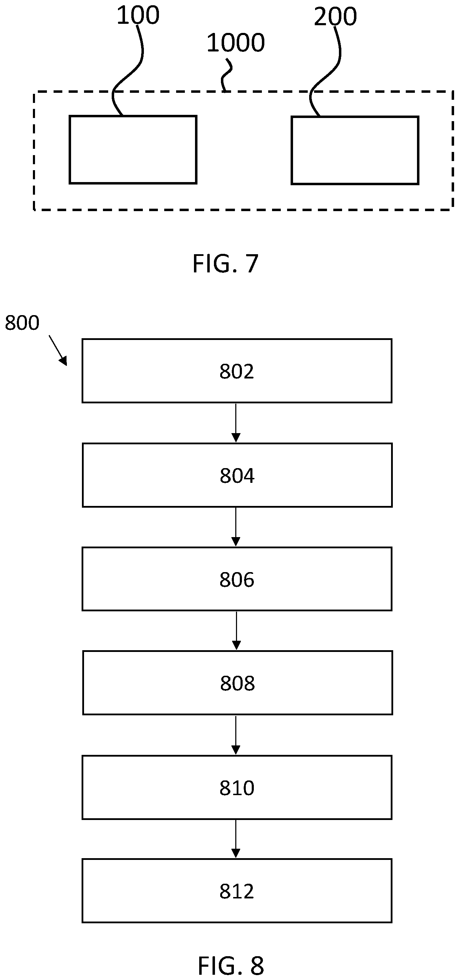

FIG 7 illustrates a system 1000 comprising: a first apparatus 100 comprising means for enabling display of at least one visual object on a first AR display 190, wherein the display of the at least one visual object on the first AR display 190 is defined by a first position parameter and a first transparency parameter; and a second apparatus 200 comprising means for enabling display of the at least one visual object on a second AR display 290, wherein the display of the at least one visual object on the second AR display 290 is defined by a second position parameter and a second transparency parameter; means for identifying at least one display constraint of the second AR display 290, wherein a display constraint of the second AR display 290 indicates a permitted combination of a position parameter and a transparency parameter; means for transforming the first position parameter and the first transparency parameter to produce the second position parameter and the second transparency parameter respectively; means for determining if a combination of the second position parameter and the second transparency parameter is a permitted combination; and
means for, in dependence upon a determination that the combination of the second position parameter and the second transparency parameter is not a permitted combination, changing at least one of the second position parameter or the second transparency parameter such that a combination of the second position parameter and the second transparency parameter is a permitted combination.

In examples, the first apparatus 100 of FIG 7 is the apparatus 100 described above and the second apparatus 200 of FIG 7 is the second apparatus 200 described above.

FIG 7 therefore illustrates a system comprising means for performing a method 800 as illustrated in FIG 8, the method 800 comprising:
at block 802, enabling display of at least one visual object on a first AR display, wherein the display of the at least one visual object on the first AR display is defined by a first position parameter and a first transparency parameter;
at block 804, identifying at least one display constraint of a second AR display, wherein a display constraint of the second AR display indicates a permitted combination of a position parameter and a transparency parameter;
at block 806, transforming the first position parameter and the first transparency parameter to produce a second position parameter and a second transparency parameter respectively;
at block 808, determining if a combination of the second position parameter and the second transparency parameter is a permitted combination;
at block 810, in dependence upon a determination that the combination of the second position parameter and the second transparency parameter is not a permitted combination, changing at least one of the second position parameter or the second transparency parameter such that a combination of the second position parameter and the second transparency parameter is a permitted combination; and
at block 812, enabling display of the at least one visual object on the second AR display, wherein the display of the at least one visual object on the second AR display is defined by the second position parameter and the second transparency parameter.

In some, but not necessarily all, examples, the second apparatus is configured to transform the first position parameter and the first transparency parameter to produce the second position parameter and the second transparency parameter, determine if the combination of the second position parameter and the second transparency parameter is a permitted combination, and if necessary, adapt the second position parameter and the second transparency parameter such that the combination of the second position parameter and the second transparency parameter is a permitted combination.

In such examples, the apparatus comprises:
means for enabling display of the at least one visual object on the first AR display;
means for creating a data packet comprising the first position parameter and the first transparency parameter; and
means for transmitting the created data packet to the second apparatus such that display of the at least one visual object on the second AR display is enabled.

In such examples, the second apparatus comprises:
means for receiving the data packet comprising at least the first position parameter and the first transparency parameter;
means for identifying at least one display constraint of the second AR display, wherein a display constraint of the second AR display indicates a permitted combination of a position parameter and a transparency parameter;
means for transforming the first position parameter and the first transparency parameter to produce a second position parameter and a second transparency parameter respectively;
means for determining if a combination of the second position parameter and the second transparency parameter is a permitted combination;
means for, in dependence upon a determination that the combination of the second position parameter and the second transparency parameter is not a permitted combination, changing at least one of the second position parameter or the second transparency parameter such that a combination of the second position parameter and the second transparency parameter is a permitted combination; and
means for enabling display of the at least one visual object on the second AR display.

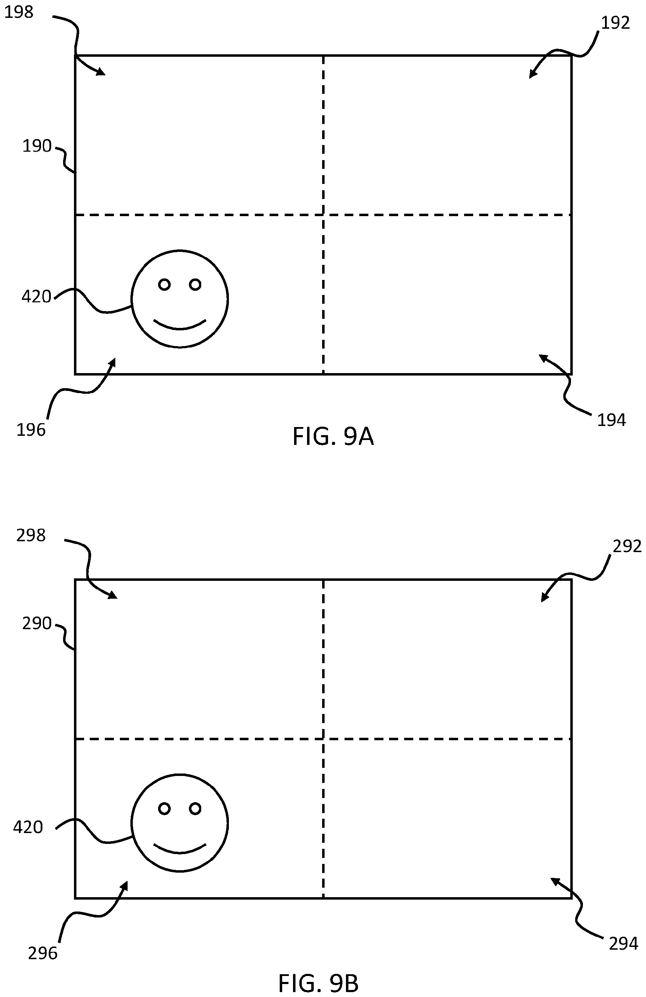

FIGs 9A - 9D illustrate an example AR display. In examples, FIG 9A illustrates the first AR display 190 and FIGs 9B - 9D illustrate the second AR display 290.

In the examples of FIGs 9A - 9D, the first AR display 190 comprises four display regions 192, 194, 196, 198 and the second AR display 290 comprises four display regions 292, 294, 296, 298.

In the example of FIG 9A, the first AR display 190 displays a first visual object 420. In the example of FIG 9A, the first position parameter positions the first visual object 420 in the lower-left display region 196 of the first AR display 190, and the first transparency parameter indicates no transparency.

The first position parameter and the first transparency parameter are transformed to obtain the second position parameter and the second transparency parameter respectively. Transforming the first position parameter of FIG 9A obtains a second position parameter that positions the first visual object 420 in the lower-left display region 296 of the second AR display 190. Transforming the first transparency parameter of FIG 9A obtains a second transparency parameter that indicates no transparency.

After transformation of the first position parameter and the first transparency parameter to obtain the second position parameter and the second transparency parameter respectively, it is determined if the combination of the second position parameter and the second transparency parameter is a permitted combination.

In the example of FIG 9B, the above combination of the second position parameter and the second transparency parameter is a permitted combination. Thus, no adaptation of the second position parameter and the second transparency parameter is required.

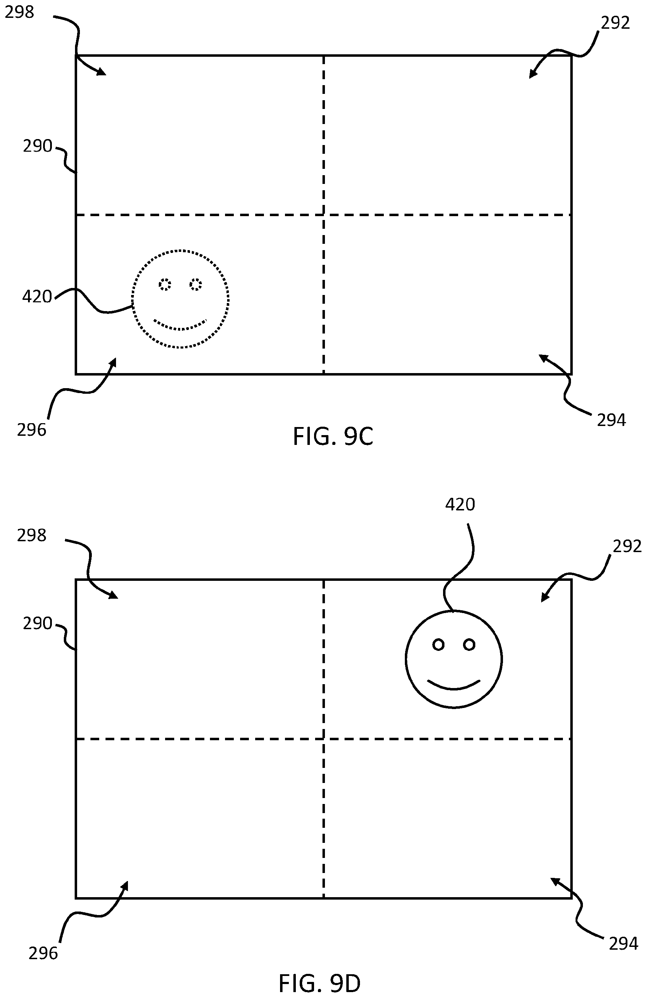

In the examples of FIGs 9C and 9D, the above combination of the second position parameter and the second transparency parameter is not a permitted combination. Thus, adaptation of the second position parameter and the second transparency parameter is required.

In the example of FIG 9C, the display constraint of the second AR display 290 permits display of a visual object in the lower-left region 296 only if that visual object has at least 50% transparency.

Therefore, adapting at least one of the second position parameter or the second transparency parameter comprises adapting the second transparency parameter to require at least 50% transparency. The first visual object 420 in FIG 9A therefore has 50% transparency (indicated by dotted lines).

In the example of FIG 9D, the display constraint does not permit display of a visual object in the lower-left region 296. However, the display constraint permits display of a visual object in the upper-right region 292.

Therefore, adapting at least one of the second position parameter or the second transparency parameter comprises adapting the second position parameter to position the first visual object 420 in the upper-right display region 292 of the second AR display 290.

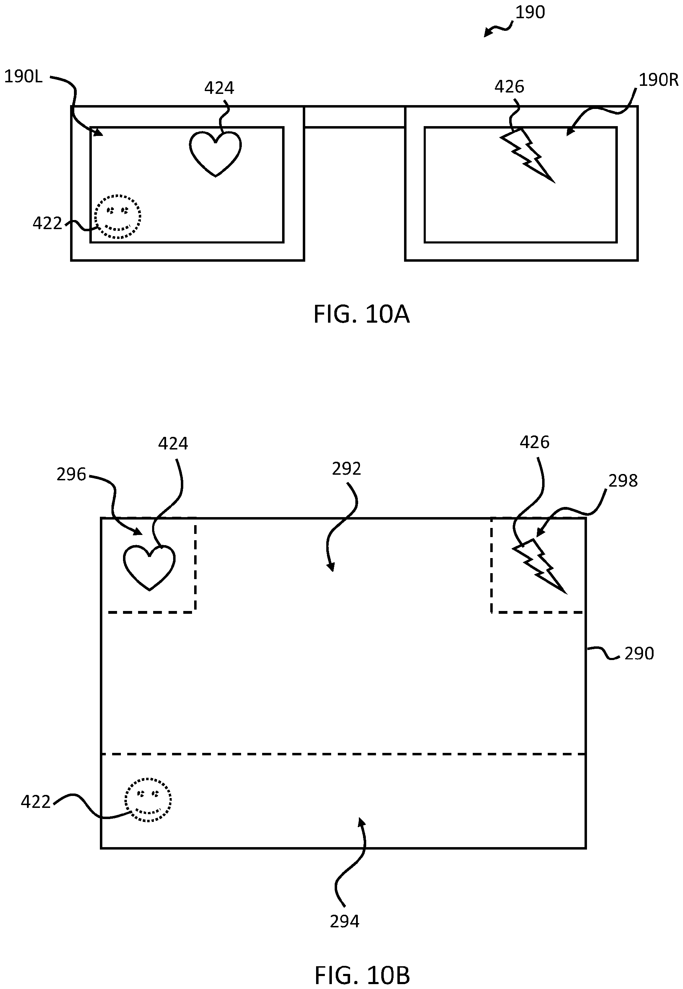

FIGs 10A - 10D illustrate further example AR displays. In examples, FIG 10A illustrates the first AR display 190 and FIGs 10B - 10D illustrate the second AR display 290.

In the example of FIG 10A, the first AR display 190 is a head-mounted mediated reality display such as smart glasses. In the examples of FIGs 10B - 10D, the second AR display 290 is an AR windshield display. However, the examples set out in FIGs 10A - 10D apply equally to examples in which the first AR display 190 and/or the second AR display 290 is a different type of display.

In the examples of FIGs 10B -10D, the second AR display 290 comprises four display regions 292, 294, 296, 298. In these examples, the display constraints of the second AR display 290 are as follows:
- Display of a visual object is not permitted in the first display region 292;
- Display of a visual object is permitted at any transparency level in the second display region 294;
- Display of a visual object is permitted in the third and fourth display regions 296, 298 if the visual object has at least 50% transparency.

In the example of FIG 10A, the first display is displaying a first visual object 422 (face), a second visual object 424 (heart) and a third visual object 426 (lightning).

In the example of FIG 10A, the first position parameter of the first visual object 422 positions the first visual object 422 in the bottom-left of the left sub-display 190L of the first display 190, and the first transparency parameter of the first visual object indicates 50% transparency.

In the example of FIG 10A, the first position parameter of the second visual object 424 positions the second visual object 424 in the top-right of the left sub-display 190L of the first display 190, and the first transparency parameter of the second visual object indicates 0% transparency.

In the example of FIG 10A, the first position parameter of the third visual object 426 positions the third visual object 426 in the top-center of the right sub-display 190R of the first display 190, and the first transparency parameter of the third visual object indicates 0% transparency.

For each of the first visual object 422, the second visual object 424 and the third visual object 426, the first position parameter and the first transparency parameter are transformed to obtain the second position parameter and the second transparency parameter respectively.

FIG 10B illustrates the first visual object 422, second visual object 424 and third visual object 426 after their respective first position parameters and first transparency parameters have been transformed to obtain respective second position parameters and second transparency parameters. In examples, the display of the first visual object 422, second visual object 424 and third visual object 426 is not carried out until after a determination of whether the combinations of the respective second position parameters and second transparency parameters are permitted combinations. Therefore, the layout illustrated in FIG 10B may not be displayed on the second AR display 290 and is for illustrative purposes only.

Transforming the first position parameter of the first visual object 422 obtains a second position parameter of the first visual object 422 that positions the first visual object 422 in the bottom-left of the second display 290 (the second display region 294). Transforming the first transparency parameter of the first visual object 422 obtains a second transparency parameter of the first visual object that indicates 50% transparency.

Therefore, the combination of the second position parameter and the second transparency parameter of the first visual object 422 is a permitted combination, because display of a visual object is permitted at any transparency level in the second display region 294.

As illustrated in FIG 10B, transforming the first position parameter of the second visual object 424 obtains a second position parameter of the second visual object 424 that positions the second visual object 424 in the top-left of the display 290 (the third display region 296). Transforming the first transparency parameter of the second visual object 424 obtains a second transparency parameter of the second visual object 424 that indicates 0% transparency.

Therefore, the combination of the second position parameter and the second transparency parameter of the second visual object 424 is not a permitted combination, because display of a visual object is permitted in the third display region 294 only if the visual object has at least 50% transparency.

As illustrated in FIG 10B, transforming the first position parameter of the third visual object 426 obtains a second position parameter of the third visual object 426 that positions the third visual object 426 in the top-right of the display 290 (the fourth display region 298). Transforming the first transparency parameter of the third visual object 426 obtains a second transparency parameter of the third visual object 426 that indicates 0% transparency.

Therefore, the combination of the second position parameter and the second transparency parameter of the third visual object 426 is not a permitted combination, because display of a visual object is permitted in the fourth display region 298 only if the visual object has at least 50% transparency.

Adaptation of at least one of the second position parameter and the second transparency parameter of at least the second visual object 424 and the third visual object 426 is therefore required.

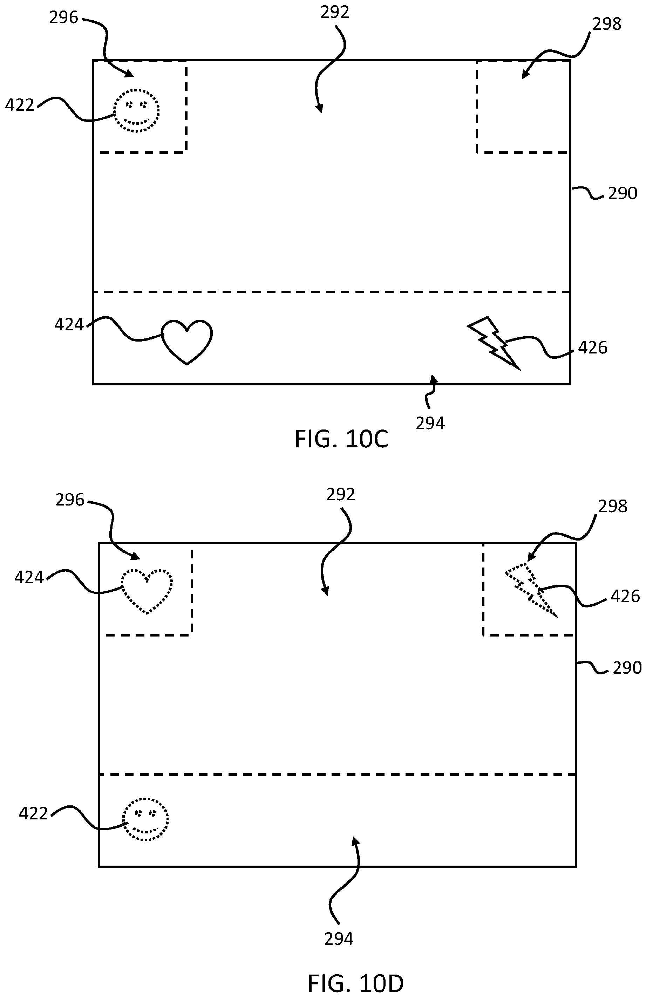

In the example of FIG 10C, the position parameters of the first visual object 422, the second visual object 424 and the third visual object 426 have been adapted and the transparency parameters of the first visual object 422, the second visual object 424 and the third visual object 426 have not been adapted.

In the example of FIG 10C, the second position parameter of the first visual object 422 positions the first visual object 422 in the top-left of the display (the third display region 296). The second transparency parameter of the first visual object 422 continues to indicate 50% transparency.

Therefore, the combination of the second position parameter and the second transparency parameter of the first visual object 422 is a permitted combination, because display of a visual object is permitted in the third display region 296 if the visual object has at least 50% transparency.

In the example of FIG 10C, the second position parameter of the second visual object 424 positions the second visual object 424 in the bottom-left of the display (the second display region 294). The second transparency parameter of the second visual object 424 continues to indicate 0% transparency.

Therefore, the combination of the second position parameter and the second transparency parameter of the second visual object 424 is a permitted combination, because display of a visual object is permitted at any transparency level in the second display region 294.

In the example of FIG 10C, the second position parameter of the third visual object 426 positions the third visual object 426 in the bottom-right of the display (the second display region 294). The second transparency parameter of the third visual object 426 continues to indicate 0% transparency.

Therefore, the combination of the second position parameter and the second transparency parameter of the third visual object 426 is a permitted combination, because display of a visual object is permitted at any transparency level in the second display region 294.

In the example of FIG 10D, the second transparency parameters of the second visual object 424 and the third visual object 426 have been adapted and the second position parameters of the second visual object 424 and the third visual object 426 have not been adapted. Neither the second transparency parameter nor the second position parameter of the first visual object 422 has been adapted.

In the example of FIG 10D, the second position parameter of the first visual object 422 positions the first visual object 422 in the bottom-left of the second display (the second display region 294). The second transparency parameter of the first visual object 422 indicates 50% transparency.

Therefore, the combination of the second position parameter and the second transparency parameter of the first visual object 422 is a permitted combination, because display of a visual object is permitted at any transparency level in the second display region 294.

In the example of FIG 10D, the second transparency parameter of the second visual object 424 indicates 50% transparency. The second position parameter of the second visual object 424 continues to position the second visual object 424 in the top-left of the display (the third display region 296).

Therefore, the combination of the second position parameter and the second transparency parameter of the second visual object 424 is a permitted combination, because display of a visual object is permitted in the third display region 296 if the visual object has at least 50% transparency.

In the example of FIG 10D, the second transparency parameter of the third visual object 426 indicates 50% transparency. The second position parameter of the third visual object 426 continues to position the third visual object 426 in the top-right of the display (the fourth display region 298).

Therefore, the combination of the second position parameter and the second transparency parameter of the third visual object 426 is a permitted combination, because display of a visual object is permitted in the fourth display region 298 if the visual object has at least 50% transparency.

FIGs 10A - 10D thus can be considered to illustrate an example in which a user views AR content comprising the at least one visual object in smart glasses (FIG 10A). The user enters a vehicle and display of the at least one visual object is handed over for display on the vehicle windshield (FIGs 10C, 10D). The transformation and adaptation of the at least one visual object allows positioning of the at least one visual object at a position that does not impede the user's view, for example while they are driving.

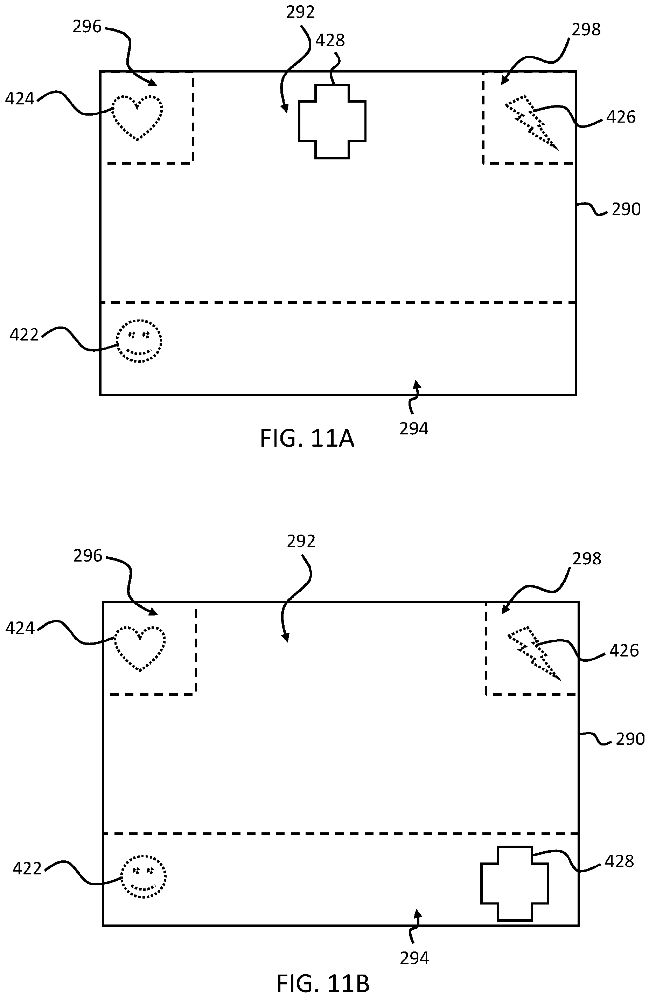

FIGs 11A - 11B illustrate further example AR displays. In examples, FIGs 11A and 11B illustrate the second AR display 290. In examples, the display constraints of the second AR displays 290 illustrated in FIGs 11A and 11B are the same as the display constraints of the second AR displays 290 illustrated in FIGs 10B - 10D.

In the examples of FIG 11A and 11B, the first visual object 422, second visual object 424 and third visual object 426 are displayed based on permitted combinations of second position parameters and second transparency parameters. In other words, the transformation and adaptation of the position parameters and transparency parameters of the first visual object 422, second visual object 424 and third visual object 426 has already occurred.

In the example of FIG 11A, a further visual object 428 is displayed. The second position parameter of the further visual object 428 positions the further visual object 428 in the top-center of the second display (the first display region 292). The second transparency parameter of the further visual object 428 indicates 0% transparency.

Therefore, the combination of the second position parameter and the second transparency parameter of the further visual object 428 is not a permitted combination, because display of a visual object is not permitted in the first display region 292.

The display of the further visual object 428 is further defined by an importance parameter. In the example of FIG 11A, the importance parameter associated with the further visual object 428 is above a threshold.

Based on a determination that the importance parameter associated with the further visual object 428 is above a threshold, the combination of the second position parameter and the second transparency parameter of the further visual object 428 is therefore designated as a permitted combination. The further visual object 428 is therefore displayed in the first display region 292 at 0% transparency.

FIG 11B illustrates the example of FIG 11A after a first time period has elapsed. Upon expiry of the first time period, it is determined if the combination of the second position parameter and the second transparency parameter associated with the further visual object 428 is a permitted combination. In examples, a duration of the first time period is based, at least in part, on the importance parameter associated with the further visual object. In examples, a higher importance parameter is associated with a longer first time period. For example, if the further visual object has an importance parameter above the threshold but below a second threshold, the duration of the first time period is a first duration. If the further visual object has an importance parameter above the threshold and above the second threshold, the duration of the first time period is a second duration, longer than the first duration.

As indicated above, the combination of the second position parameter and the second transparency parameter of the further visual object 428 is not a permitted combination. Therefore, adaptation of at least one of the second position parameter and the second transparency parameter of the further visual object 428 is required.

In the example of FIG 11B, the second position parameter of the further visual object 428 has been adapted and the second transparency parameter of the further visual object 428 has not been adapted. The second position parameter of the further visual object 428 positions the further visual object 428 in the bottom-right of the display (the second display region 294). The second transparency parameter of the further visual object 428 continues to indicate 0% transparency.

Therefore, the combination of the second position parameter and the second transparency parameter of the further visual object 428 is a permitted combination, because display of a visual object is permitted at any transparency level in the second display region 294.

In the example of FIG 11B, the second position parameter of the further visual object 428 has been adapted and the second transparency parameter of the further visual object 428 has not been adapted. However, it is to be appreciated that in other examples the second position parameter of the further visual object 428 could be adapted and the second transparency parameter of the further visual object 428 could not be adapted, or both the second position parameter and the second transparency parameter of the further visual object could be adapted.

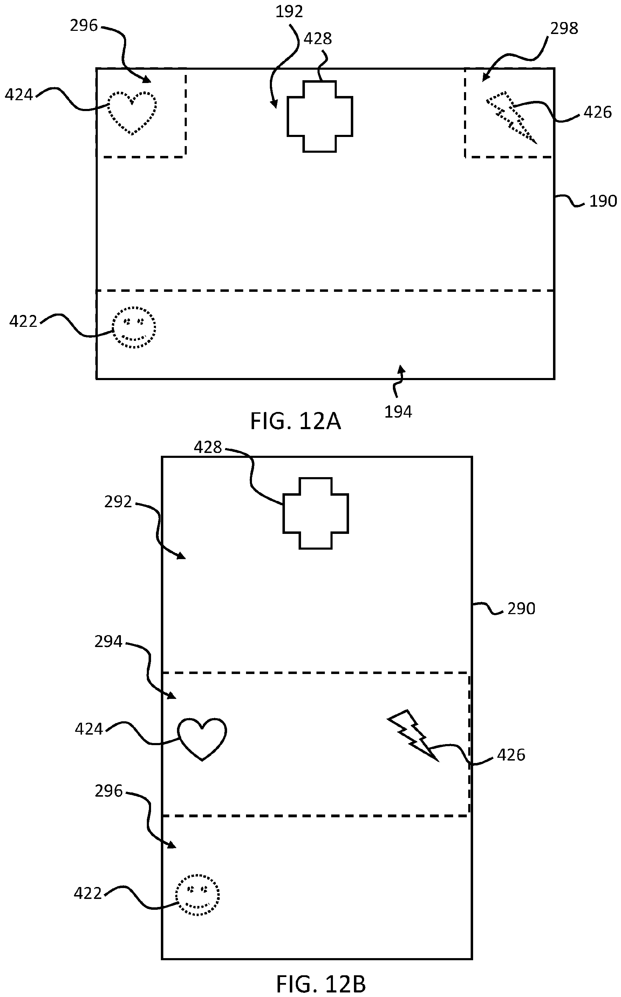

FIGs 12A and 12B illustrate further AR displays. FIG 12A illustrates an example in which the at first visual object 422, second visual object 424 and third visual object 426 have been displayed on the second AR display 290 as described with reference to FIGs 9 - 11. In examples, FIG 12B illustrates a further AR display. In the example of FIG 12A, the first visual object 422, second visual object 424 and third visual object 426 are to be displayed on a further AR display (FIG 12B). Therefore, for the purposes of FIG 12A, the second AR display 290 illustrated in FIGs 10- 11 is now considered to be the first AR display 190, and the AR display illustrated in FIG 12B is the second AR display 290.

In the example of FIG 12A, the first AR display 190 is a windshield display. In the example of FIG 12B, the second AR display 290 is a smartphone display. However, the examples set out in FIGs 12A and 12B apply equally to examples in which the first AR display 190 and/or the second AR display 290 is a different type of display.

It will be appreciated that, in examples, display of the at least one visual object can be moved from the second AR display 290 back to the first AR display 190. In some such examples, for the purposes of moving the display of the at least one virtual object back to the first AR display 190, the second AR display 290 is therefore considered to be the first AR display 190 and the first AR display is considered to be the second AR display 290 for this purpose.

In the example of FIG 12B, the second position parameter and second transparency parameter of each of the first visual object 422, second visual object 424 and third visual object 426 have been adapted to be permitted combinations.

In the example of FIG 12B, the first time period has not expired. Therefore, the combination of the second position parameter and the second transparency parameter of the further visual object 428 is a permitted combination.

Upon expiry of the first time period, the second apparatus is configured to assess the combination of the second position parameter and the second transparency parameter to determine if it is a permitted combination, and to adapt at least one of the second position parameter and the second transparency parameter if not.

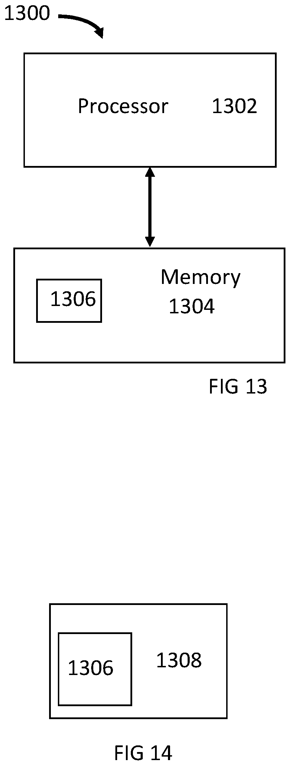

Fig 13 illustrates an example of a controller 1300 suitable for use in an apparatus 100 and/or a second apparatus 200. Separate controllers 1300 may be provided for use in the apparatus and the second apparatus. Implementation of a controller 1300 may be as controller circuitry. The controller 1300 may be implemented in hardware alone, have certain aspects in software including firmware alone or can be a combination of hardware and software (including firmware).

As illustrated in Fig 13 the controller 1300 may be implemented using instructions that enable hardware functionality, for example, by using executable instructions of a computer program 1306 in a general-purpose or special-purpose processor 1302 that may be stored on a computer readable storage medium (disk, memory etc) to be executed by such a processor 1302.

The processor 1302 is configured to read from and write to the memory 1304. The processor 1302 may also comprise an output interface via which data and/or commands are output by the processor 1302 and an input interface via which data and/or commands are input to the processor 1302.

The memory 1304 stores a computer program 1306 comprising computer program instructions (computer program code) that controls the operation of the apparatus 100 and/or the second apparatus 200 when loaded into the processor 1302. The computer program instructions, of the computer program 1306, provide the logic and routines that enables the apparatus to perform the methods illustrated in the accompanying Figs. The processor 1302 by reading the memory 1304 is able to load and execute the computer program 1306.

The apparatus 100 comprises:
at least one processor 1302; and
at least one memory 1304 including computer program code
the at least one memory 1304 and the computer program code configured to, with the at least one processor 1302, cause the apparatus 100 at least to perform:
   enabling 302 display of at least one visual object on a first AR display, wherein the display of the at least one visual object on the first AR display is defined by a first position parameter and a first transparency parameter;
   obtaining 304 at least one display constraint of a second AR display, wherein the at least one display constraint of the second AR display indicates one or more permitted combinations of a position parameter and a transparency parameter;
   transforming 306 the first position parameter and the first transparency parameter to produce a second position parameter and a second transparency parameter respectively;
   determining 308 if a combination of the second position parameter and the second transparency parameter is a permitted combination; and
   in dependence upon a determination that the combination of the second position parameter and the second transparency parameter is not a permitted combination, adapting 310 at least one of the second position parameter or the second transparency parameter such that a combination of the second position parameter and the second transparency parameter is a permitted combination.

The second apparatus 200 comprises:
at least one processor 1302; and
at least one memory 1304 including computer program code
the at least one memory 1304 and the computer program code configured to, with the at least one processor 1302, cause the apparatus 100 at least to perform:
   transmitting 602 at least one display constraint of a second AR display to a first apparatus 100, wherein a display constraint of the second AR display indicates a permitted combination of a position parameter and a transparency parameter;
   receiving 604 a data packet from the first apparatus 100 comprising at least a second position parameter and a second transparency parameter wherein the combination of the second position parameter and the second transparency parameter is a permitted combination; and
   in response to receiving the data packet, enabling 606 display of at least one visual object on the second AR display, wherein the display of the at least one visual object on the second AR display is defined by the second position parameter and the second transparency parameter.

The apparatus 100 comprises:
at least one processor 1302; and
at least one memory 1304 storing instructions that, when executed by the at least one processor 1302, cause the apparatus at least to:
enable 302 display of at least one visual object on a first AR display, wherein the display of the at least one visual object on the first AR display is defined by a first position parameter and a first transparency parameter;
obtain 304 at least one display constraint of a second AR display, wherein the at least one display constraint of the second AR display indicates one or more permitted combinations of a position parameter and a transparency parameter;
transform 306 the first position parameter and the first transparency parameter to produce a second position parameter and a second transparency parameter respectively;
determine 308 if a combination of the second position parameter and the second transparency parameter is a permitted combination; and
in dependence upon a determination that the combination of the second position parameter and the second transparency parameter is not a permitted combination, adapt 310 at least one of the second position parameter or the second transparency parameter such that a combination of the second position parameter and the second transparency parameter is a permitted combination.

The apparatus 200 comprises:
at least one processor 1302; and
at least one memory 1304 storing instructions that, when executed by the at least one processor 1302, cause the apparatus at least to:
transmit 602 at least one display constraint of a second AR display to a first apparatus 100, wherein a display constraint of the second AR display indicates a permitted combination of a position parameter and a transparency parameter;
receive 604 a data packet from the first apparatus 100 comprising at least a second position parameter and a second transparency parameter wherein the combination of the second position parameter and the second transparency parameter is a permitted combination; and
in response to receiving the data packet, enable 606 display of at least one visual object on the second AR display, wherein the display of the at least one visual object on the second AR display is defined by the second position parameter and the second transparency parameter.

As illustrated in Fig 14, the computer program 1306 may arrive at the apparatus 100 via any suitable delivery mechanism 1308. The delivery mechanism 1308 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1306. The delivery mechanism may be a signal configured to reliably transfer the computer program 1306. The apparatus 100 may propagate or transmit the computer program 1306 as a computer data signal.

Computer program instructions for causing an apparatus to perform at least the following or for performing at least the following:
enabling 302 display of at least one visual object on a first AR display, wherein the display of the at least one visual object on the first AR display is defined by a first position parameter and a first transparency parameter;
obtaining 304 at least one display constraint of a second AR display, wherein the at least one display constraint of the second AR display indicates one or more permitted combinations of a position parameter and a transparency parameter;
transforming 306 the first position parameter and the first transparency parameter to produce a second position parameter and a second transparency parameter respectively;
determining 308 if a combination of the second position parameter and the second transparency parameter is a permitted combination; and
in dependence upon a determination that the combination of the second position parameter and the second transparency parameter is not a permitted combination, adapting 310 at least one of the second position parameter or the second transparency parameter such that a combination of the second position parameter and the second transparency parameter is a permitted combination.

Computer program instructions for causing a second apparatus to perform at least the following or for performing at least the following:
transmitting 602 at least one display constraint of a second AR display to a first apparatus 100, wherein a display constraint of the second AR display indicates a permitted combination of a position parameter and a transparency parameter;
receiving 604 a data packet from the first apparatus 100 comprising at least a second position parameter and a second transparency parameter wherein the combination of the second position parameter and the second transparency parameter is a permitted combination; and
in response to receiving the data packet, enabling 606 display of at least one visual object on the second AR display, wherein the display of the at least one visual object on the second AR display is defined by the second position parameter and the second transparency parameter.

The computer program instructions may be comprised in a computer program, a non-transitory computer readable medium, a computer program product, a machine readable medium. In some but not necessarily all examples, the computer program instructions may be distributed over more than one computer program.

Although the memory 1304 is illustrated as a single component/circuitry it may be implemented as one or more separate components/circuitry some or all of which may be integrated/removable and/or may provide permanent/semi-permanent/ dynamic/cached storage.

Although the processor 1302 is illustrated as a single component/circuitry it may be implemented as one or more separate components/circuitry some or all of which may be integrated/removable. The processor 1302 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 1306. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use `a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
means for enabling display of at least one visual object on a first AR display, wherein the display of the at least one visual object on the first AR display is defined by a first position parameter and a first transparency parameter;
means for obtaining at least one display constraint of a second AR display, wherein the at least one display constraint of the second AR display indicates one or more permitted combinations of a position parameter and a transparency parameter;
means for transforming the first position parameter and the first transparency parameter to produce a second position parameter and a second transparency parameter respectively;
means for determining if a combination of the second position parameter and the second transparency parameter is a permitted combination; and
means for, in dependence upon a determination that the combination of the second position parameter and the second transparency parameter is not a permitted combination, adapting at least one of the second position parameter or the second transparency parameter such that a combination of the second position parameter and the second transparency parameter is a permitted combination.

2. An apparatus as claimed in claim 1, further comprising:
means for creating a data packet comprising at least the second position parameter and the second transparency parameter; and
means for transmitting the created data packet towards a second AR apparatus such that the display of the at least one visual object on the second AR display is enabled.

3. An apparatus as claimed in any preceding claim, further comprising:
means for receiving an indication that the display of the at least one visual object is to be moved from the first AR display to the second AR display;
wherein the means for transforming the first position parameter and the first transparency parameter is configured to perform the transformation in dependence upon receiving the indication.

4. An apparatus as claimed in any preceding claim, wherein at least one of the first AR display or the second AR display is a see-through AR display.

5. An apparatus as claimed in any preceding claim, wherein the means for transforming the first position parameter and the first transparency parameter is configured to perform a content-independent transform of the first position parameter and the first transparency parameter.

6. An apparatus as claimed in any preceding claim, wherein the means for adapting at least one of the second position parameter or the second transparency parameter is configured to perform a content-dependent transform of at least one of the second position parameter or the second transparency parameter.

7. An apparatus as claimed in any preceding claim, wherein the means for adapting at least one of the second position parameter or the second transparency parameter is configured to perform either: adapting the second position parameter and not adapting the second transparency parameter; or adapting the second transparency parameter and not adapting the second position parameter.

8. An apparatus as claimed in any preceding claim: wherein the first position parameter indicates a position of the at least one visual object as being in one of a plurality of first display regions of the first AR display; and
wherein the second position parameter indicates a position of the at least one visual object as being in one of a plurality of second display regions of the second AR display.

9. An apparatus as claimed in any preceding claim, wherein the at least one display constraint of the second AR display is at least partially pre-defined.

10. An apparatus as claimed in claim 9, wherein the at least one display constraint of the second AR display is further defined by a user input.

11. An apparatus as claimed in any preceding claim, wherein the means for enabling display of at least one visual object on a first AR display are configured to display a plurality of visual objects on the first AR display, and wherein the display of the plurality of visual objects on the first AR display is defined by a plurality of respective first position parameters and first transparency parameters.

12. An apparatus as claimed in any preceding claim, further comprising the first AR display.

13. A method comprising:
enabling display of at least one visual object on a first AR display, wherein the display of the at least one visual object on the first AR display is defined by a first position parameter and a first transparency parameter;
identifying at least one display constraint of a second AR display, wherein a display constraint of the second AR display indicates a permitted combination of a position parameter and a transparency parameter;
transforming the first position parameter and the first transparency parameter to produce a second position parameter and a second transparency parameter respectively;
determining if a combination of the second position parameter and the second transparency parameter is a permitted combination;
in dependence upon a determination that the combination of the second position parameter and the second transparency parameter is not a permitted combination, changing at least one of the second position parameter or the second transparency parameter such that a combination of the second position parameter and the second transparency parameter is a permitted combination; and
enabling display of the at least one visual object on the second AR display, wherein the display of the at least one visual object on the second AR display is defined by the second position parameter and the second transparency parameter.

14. A method as claimed in claim 13, further comprising:
creating a data packet comprising at least the second position parameter and the second transparency parameter; and
transmitting the created data packet towards a second AR apparatus such that the display of the at least one visual object on the second AR display is enabled.

15. A computer program comprising instructions which, when executed by an apparatus, cause the apparatus to perform at least:
enabling display of at least one visual object on a first AR display, wherein the display of the at least one visual object on the first AR display is defined by a first position parameter and a first transparency parameter;
obtaining at least one display constraint of a second AR display, wherein the at least one display constraint of the second AR display indicates one or more permitted combinations of a position parameter and a transparency parameter;
transforming the first position parameter and the first transparency parameter to produce a second position parameter and a second transparency parameter respectively;
determining if a combination of the second position parameter and the second transparency parameter is a permitted combination; and
in dependence upon a determination that the combination of the second position parameter and the second transparency parameter is not a permitted combination, adapting at least one of the second position parameter or the second transparency parameter such that a combination of the second position parameter and the second transparency parameter is a permitted combination.
